# FASCICULE DE BREVET EUROPEEN

(11) **EP 3 441 271 B1**
(45) Date de publication et mention de la délivrance du brevet: **20.01.2021**
(21) Numéro de dépôt: 18185645.1
(22) Date de dépôt: 26.07.2018
(51) Int. Cl.: B60S 1/48, B60S 1/52

(54) **SYSTEME DE NETTOYAGE D'UNE SURFACE VITREE DE VEHICULE**
REINIGUNGSSYSTEM EINER FAHRZEUG-GLASOBERFLÄCHE
SYSTEM FOR CLEANING A GLAZED VEHICLE SURFACE

(30) Priorité: 09.08.2017 FR 1757611
(43) Date de publication de la demande: 13.02.2019
(73) Titulaire: Valeo Systèmes d'Essuyage, 78322 Le Mesnil Saint Denis (FR)
(72) Inventeur: GIRAUD, Frédéric, 78322 LE MESNIL SAINT DENIS (FR); LE LIGNE, Christophe, 78322 LE MESNIL SAINT DENIS (FR)
(74) Mandataire: Valeo Visibility

(56) Documents cités:
- DE-A1- 10 115 975
- DE-A1-102016 006 039
- FR-A1- 2 986 877
- JP-A- 2014 037 239
- US-A1- 2007 209 687

## Description

L'invention se rapporte au domaine des systèmes de nettoyage équipant les véhicules automobiles. Elle concerne plus particulièrement le domaine des systèmes de nettoyage d'une surface vitrée de tels véhicules.

Le document DE 101 15 975 A1 divulgue un système de nettoyage selon le préambule de la revendication indépendante.

Le document US2012/266926 décrit une architecture d'un système de nettoyage comportant une pluralité de dispositifs de projection d'un produit nettoyant. Ces dispositifs de projection sont disposés en face avant et/ou en face arrière et/ou sur un rétroviseur du véhicule pour permettre le nettoyage d'une surface vitrée associée.

Dans de tels systèmes de nettoyage, des premiers dispositifs de projection peuvent être actionnés par une commande manuelle déclenchée par un utilisateur du véhicule et des deuxièmes dispositifs de projection peuvent être actionnés par une commande automatique déclenchée par un dispositif d'aide à la conduite et/ou à la manœuvre de ce véhicule. Les surfaces vitrées associées aux premiers dispositifs de projection correspondent, par exemple, au pare-brise et à la lunette arrière du véhicule, alors que les surfaces vitrées associées aux deuxièmes dispositifs de projection correspondent, par exemple, aux surfaces optiques de capteurs destinés à l'aide à la conduite et/ou à la manœuvre du véhicule.

Pour alimenter en produit nettoyant ces dispositifs de projection, l'architecture du système de nettoyage du document cité comporte un réservoir et une pompe reliés à chacun de ces dispositifs de projection via une électrovanne principale dérivant le produit nettoyant fourni par la pompe vers des conduites respectivement associées à chacun des dispositifs de projection du véhicule. Ainsi, dans cette architecture, les dispositifs de projection sont alimentés par la pompe du système de nettoyage distinctement les uns des autres, le pilotage de l'électrovanne dirigeant le produit nettoyant pompée du réservoir vers l'une ou l'autre des conduites

Lorsqu'un système de nettoyage du véhicule comporte un grand nombre de dispositifs de projection alimentés par une même pompe, le nombre de conduites à prévoir pour relier hydrauliquement l'ensemble des dispositifs de projection est important et peut être problématique, en termes de complexité de montage et de coût. Chacune des conduites hydrauliques représente par exemple un coût au mètre pondérant fortement le coût global du système de nettoyage.

Par ailleurs, chacun des dispositifs de projection doit être relié électriquement à une unité électronique principale pour la commande de la fonction de nettoyage, et par exemple le déclenchement de la fonction de nettoyage et/ou la mise en œuvre d'un déploiement du projecteur pour réaliser cette fonction de nettoyage. Là encore, pour permettre de relier électriquement chacun des dispositifs de projection à l'unité électronique principale, il est nécessaire de prévoir un système de nettoyage comportant un grand nombre de câbles et de connectiques électriques. Un agencement dans lequel un câble est tiré entre l'unité électronique principale et chacun des dispositifs de projection représente là encore un coût au mètre déterminant le coût global du système de nettoyage.

Dans un contexte de développement des véhicules, et par exemple les véhicules autonomes, où le nombre de capteurs est amené à être de plus en plus important sur le pourtour du véhicule, on comprend que ces inconvénients doivent être considérés.

La présente invention a pour but de pallier à au moins l'un des inconvénients précités et de proposer un système de nettoyage équipant un véhicule et permettant de réduire son coût de fabrication tout en simplifiant son montage dans le véhicule.

A cet effet, l'invention a pour objet un système de nettoyage d'au moins une surface vitrée de véhicule comprenant un bus de distribution hydraulique principal apte à permettre la circulation d'un produit nettoyant depuis un réservoir de stockage, et au moins deux dispositifs de projection du produit nettoyant sur l'au moins une surface vitrée. Selon l'invention, les au moins deux dispositifs de projection sont reliés par des organes de raccordement hydraulique au bus de distribution hydraulique, indépendamment l'un de l'autre et dans des zones successives dudit bus.

On comprendra par :
- « bus de distribution hydraulique », un conduit permettant l'acheminement du produit nettoyant,
- « produit nettoyant », un produit liquide ou gazeux pouvant être projeté sur une surface vitrée en vue du nettoyage de celle-ci, un tel produit pouvant être indifféremment dans la présente invention de l'eau, du liquide de nettoyage lave-glace, ou encore de l'air,
- « surface vitrée », une surface transparente pouvant être d'une part une des vitres de l'habitacle du véhicule et notamment un pare-brise ou une lunette arrière, ou d'autre part une surface optique d'un système de détection optique équipant le véhicule ; notamment, on peut prévoir que la surface vitrée soit réalisée en verre ou bien en un plastique transparent de type Plexiglas.

Selon l'invention, il est notable que les dispositifs de projection sont raccordés au chemin d'alimentation du produit nettoyant indépendamment l'un de l'autre, c'est-à-dire avec des organes de raccordement hydraulique, par exemple des conduits secondaires de faibles longueurs par rapport au conduit hydraulique principal, propres à chaque dispositif de projection et raccordés sur le conduit hydraulique principal en des points de connexion décalés les uns par rapport aux autres.

Grâce au système de nettoyage selon l'invention, il est possible de réduire sensiblement le coût global de l'implantation dans le véhicule d'un tel système de nettoyage. En effet, contrairement à l'architecture de systèmes de nettoyage connus, il n'est utilisé qu'un conduit hydraulique pour alimenter hydrauliquement chacun des dispositifs de projection équipant un véhicule, le conduit hydraulique formant de la sorte un bus de distribution sur lequel viennent se servir les dispositifs de distribution en fonction du besoin de nettoyage. Ces deux dispositifs de projection sont chacun reliés hydrauliquement à ce même conduit hydraulique le long de celui-ci de sorte que chacun de ces dispositifs de projection peut être desservi en produit nettoyant par le conduit hydraulique principal indépendamment l'un de l'autre. On comprend que le système de nettoyage selon l'invention est d'autant plus intéressant qu'il comporte un grand nombre de dispositifs de projection, raccordés respectivement sur un même conduit hydraulique principal, à distance les uns des autres le long de ce conduit hydraulique principal circulant le long du véhicule.

De la sorte, il est notable selon l'invention que l'on simplifie grandement les circuits hydrauliques d'un système de nettoyage équipant un véhicule. En effet, selon l'invention, le conduit hydraulique principal joue le rôle de bus de distribution hydraulique, en parcourant le véhicule pour alimenter hydrauliquement chacun de ces dispositifs de projection équipant le véhicule. La dimension des conduits hydrauliques secondaires, pouvant former les organes de raccordement spécifiques à chaque dispositif de projection, est petite et les contraintes de fixation du circuit hydraulique portent ainsi surtout sur le conduit hydraulique principal, mutualisé pour chaque dispositif de projection. Ceci permet avantageusement d'optimiser l'encombrement dans le véhicule des circuits hydrauliques pour de tels systèmes de nettoyage.

Par ailleurs, les conduits hydrauliques sont régulièrement fixés sur des éléments de structure du véhicule par des attaches, que ce soit le long ou à travers de parois délimitant l'habitacle par exemple, et on comprend que la diminution de la longueur totale des conduits (principal et secondaires) permet de diminuer le nombre de ces attaches, et donc le coût des pièces à prévoir pour l'installation du système de nettoyage dans le véhicule et le temps nécessaire pour le montage de ce système.

Selon une caractéristique particulière de l'invention, le système de nettoyage comprend un unique bus de distribution hydraulique et les dispositifs de projection sont directement fixés sur ce bus de distribution hydraulique, l'organe de raccordement spécifique à chaque dispositif de projection consistant en un piquage du dispositif de projection sur le bus de distribution hydraulique. Grâce à cette caractéristique, il est possible de simplifier encore davantage les circuits hydrauliques d'un système de nettoyage équipant un véhicule en parcourant le véhicule pour alimenter hydrauliquement chacun des dispositifs de projection de ce véhicule.

Selon un mode de réalisation de l'invention, le bus de distribution hydraulique forme un circuit hydraulique ouvert. En d'autres termes, le produit nettoyant circulant dans le bus de distribution hydraulique est à une pression sensiblement différente entre une première extrémité du bus de distribution hydraulique reliée à une sortie de la pompe et une deuxième extrémité du bus de distribution hydraulique fermée et opposée à la première extrémité, ceci lorsque tous les dispositifs de projection reliés à ce bus de distribution hydraulique sont actionnés.

On pourra envisager que le bus de distribution hydraulique forme un circuit hydraulique fermé. En d'autres termes, le produit nettoyant circule dans une boucle fermée et présente de la sorte une pression quasi constante en entrée et en sortie du bus de distribution hydraulique, ceci lorsque tous les dispositifs de projection reliés à ce bus de distribution hydraulique sont actionnés.

Selon une caractéristique de l'invention, le système de nettoyage comprend une pompe apte à alimenter le bus de distribution hydraulique en produit nettoyant. Notamment, la pompe peut alimenter le bus de distribution hydraulique en puisant du produit nettoyant dans un réservoir de stockage de ce produit. Lorsque le bus de distribution hydraulique forme un circuit hydraulique fermé, une première extrémité du bus de distribution hydraulique est reliée à une sortie de la pompe et une deuxième extrémité du bus de distribution hydraulique opposée à la première extrémité est reliée à une entrée de la pompe.

Selon une caractéristique de l'invention, le bus de distribution hydraulique comprend au moins deux portions agencées de part et d'autre d'une paroi et reliées l'une à l'autre par un connecteur hydraulique. Ce mode de réalisation permet de relier hydrauliquement deux portions du bus de distribution hydraulique s'étendant le long du véhicule et formant selon l'invention le conduit principal de distribution, ces deux portions étant séparées par une paroi du véhicule. Le connecteur hydraulique peut être monté dans une ouverture formée dans cette paroi. Une telle paroi peut être métallique ou plastique et correspond à une paroi sur le chemin de distribution du bus de distribution hydraulique parcourant le véhicule pour desservir les dispositifs de projection.

Une extrémité de chaque portion du bus de distribution hydraulique destinée à être raccordée l'une à l'autre peut porter un port de connexion hydraulique pour son raccordement au connecteur hydraulique.

Dans ce contexte de conduit principal de distribution, les au moins deux dispositifs de projection peuvent notamment être reliés à une même portion du bus de distribution hydraulique, ou être reliés respectivement à des portions différentes du bus de distribution hydraulique. Notamment, on pourra prévoir que les dispositifs de distribution sont agencés de sorte que chaque portion du bus de distribution hydraulique dessert au moins deux dispositifs de distribution.

Selon une caractéristique de l'invention, les organes de raccordement hydraulique spécifiques à chaque dispositif de projection sont formés par des seringues prévues pour percer le bus de distribution hydraulique. Par seringue, on entend un tube solidaire du dispositif de projection et portant à son extrémité libre une pointe configurée pour percer le conduit principal hydraulique formant le bus de distribution, le tube étant creux pour former un conduit hydraulique secondaire dérivant du bus de distribution hydraulique pour alimenter le dispositif de nettoyage.

Selon une caractéristique de l'invention, au moins un des dispositifs de projection comprend des organes de maintien mécanique sur le bus de distribution hydraulique. On comprendra que chacun des dispositifs de projection peut être fixé sur le bus de distribution hydraulique par un organe de maintien mécanique qui lui est propre. De tels organes de maintien mécanique permettent d'utiliser le bus de distribution hydraulique pour porter les dispositifs de projection.

Selon une caractéristique de l'invention, chacun des dispositifs de projection comprend une électrovanne et un gicleur.

Selon une caractéristique de l'invention, l'organe de raccordement hydraulique et l'organe de maintien mécanique, d'un dispositif de projection sont portés par l'électrovanne de ce dispositif de projection. Une telle électrovanne peut être avantageusement reliée mécaniquement et hydrauliquement au bus de distribution hydraulique dans une même opération d'assemblage.

Le gicleur peut être de type fixe ou bien télescopique. En d'autres termes, le dispositif de projection est configuré pour que la ou les buses de projection du produit nettoyant gardent une position fixe pendant et entre les opérations de nettoyage, ou bien que ces buses de projection soient montées sur un corps télescopique susceptible de prendre une position de nettoyage en regard de la surface vitrée à nettoyer et une position escamotée.

Selon une caractéristique de l'invention, au moins un des dispositifs de projection est associé à un système de détection optique et le dispositif de projection et le système de détection optique associé sont logés dans un boîtier commun.

Un tel système de détection optique peut être un capteur optique du type caméra vidéo ou encore scanner laser, nécessaire pour permettre le fonctionnement d'un dispositif d'aide à la conduite et/ou à la manœuvre du véhicule. La surface vitrée de ces capteurs est alors une surface optique formée par un verre de protection exposé aux intempéries.

Dans ce contexte particulier de la présence d'un boîtier commun, l'organe de raccordement hydraulique et l'organe de maintien mécanique d'un dispositif de projection par rapport au bus de distribution hydraulique peuvent être portés par le boîtier. Le boîtier préalablement équipé du dispositif de projection et du capteur peut alors être relié mécaniquement et hydrauliquement au bus de distribution hydraulique. Le boîtier forme alors une interface de connexion mécanique et hydraulique entre le bus de distribution hydraulique et le dispositif de projection correspondant.

Selon l'invention, le système de nettoyage comprend un bus de commande électronique, les au moins deux dispositifs de projection étant reliés électriquement au bus de commande électronique indépendamment l'un de l'autre.

Chaque dispositif de projection peut ainsi être configuré pour comporter un organe de raccordement hydraulique à un bus de distribution hydraulique, par ailleurs commun à tous les dispositifs de projection, et un organe de raccordement électrique à un bus de commande électronique, là encore avantageusement commun à tous les dispositifs de projection.

On participe ainsi à réduire encore davantage le coût global d'un tel système de nettoyage. En effet, contrairement à l'architecture de systèmes de nettoyage connus, il n'est utilisé qu'un bus de commande électronique pour commander les au moins deux dispositifs de projection équipant le véhicule. Selon une caractéristique de l'invention, le bus de commande électronique peut suivre le chemin du bus de distribution hydraulique parcourant le véhicule pour commander électriquement chacun de ces dispositifs de projection équipant le véhicule. Ceci permet avantageusement d'optimiser l'encombrement dans le véhicule dédié aux circuits électriques pour de tels systèmes de nettoyage. En pratique, le bus de commande électronique, qui doit être régulièrement fixé sur les éléments de structure du véhicule par des attaches, peut partager les attaches de fixation du bus de distribution hydraulique.

Selon différents modes de mise en oeuvre de l'invention, on pourra prévoir que le bus de commande électronique est un bus fonctionnant avec un protocole de communication de type courant porteur en ligne (CPL), ou bien que le protocole de communication est de type LIN ou CAN.

On comprendra que l'unité électronique de pilotage d'une électrovanne est configurée pour traiter une commande transmise par le bus de commande électronique selon le type de bus de commande électronique envisagée.

Selon une autre caractéristique de l'invention, l'électrovanne du dispositif de projection comprend une borne de connexion électrique destinée à être reliée au bus de commande électronique, l'électrovanne comprenant une unité électronique de pilotage pour sa commande. Lorsqu'un ordre de commande automatique en nettoyage est reçu par l'électrovanne via le bus de commande électronique, celle-ci peut alors autoriser le passage du produit nettoyant depuis le bus de distribution hydraulique vers le gicleur pour le projeter sur la surface vitrée qui lui est associée.

Plus particulièrement, la borne de connexion électrique comporte trois broches de connexion configurées pour coopérer avec trois brins, à savoir, deux brins d'alimentation électrique et un brin de commande électronique.

Les deux brins d'alimentation permettent de relier l'électrovanne du dispositif de projection correspondant à une source d'alimentation du véhicule, par exemple un réseau basse tension de type 12V, alors que le brin de commande électronique permet de relier l'électrovanne du dispositif de projection correspondant au bus de commande électronique.

Lorsque le bus de commande électronique est un bus de type CPL, il peut être prévu que la borne de connexion électrique comporte uniquement deux broches pour coopérer avec les deux uniques brins d'alimentation électrique du bus CPL, étant entendu que le principe de la technologie de courant porteur en ligne permet de transporter une information de commande à l'unité électronique de pilotage de l'électrovanne par l'intermédiaire d'une fréquence du courant électrique du réseau d'alimentation.

Avantageusement, le conduit principal hydraulique est flexible. En d'autres termes, le bus de distribution hydraulique est réalisé dans une matière élastique permettant de faire suivre au conduit principal hydraulique les formes et contours des éléments de structure du véhicule contre lesquels il doit s'étendre.

Selon l'invention, le bus de commande électronique et le bus de distribution hydraulique forment un même bus de distribution électrique et hydraulique des dispositifs de projection. Sur ce bus de distribution électrique et hydraulique viennent se connecter distinctement les uns des autres les dispositifs de projection. En d'autres termes, le bus de commande électronique est formé conjointement avec le bus de distribution hydraulique. Grâce à ce mode de réalisation particulier, il est possible de simplifier encore l'assemblage du système de nettoyage dans le véhicule.

Dans ce contexte, le conduit principal hydraulique formant le bus de distribution hydraulique peut être formé d'un tube extrudé présentant au centre du tube un canal central à l'intérieur duquel est susceptible de circuler le produit nettoyant et présentant sur la périphérie du tube des conduites additionnelles à l'intérieur desquelles sont susceptibles de circuler chacun des brins d'alimentation et de commande du bus de commande électronique. En variante, les conduites additionnelles recevant le bus de commande électronique peuvent être surmoulées sur le tube associé au bus de distribution hydraulique.

Selon une caractéristique de l'invention, un réseau d'alimentation des dispositifs de projection, le bus de commande électronique et le bus hydraulique forment un unique bus de distribution électrique et hydraulique des dispositifs de projection. En d'autres termes, le réseau d'alimentation des dispositifs de projection et le bus de commande électronique sont formés conjointement avec le bus de distribution hydraulique. On comprendra alors qu'un tel bus de distribution permet d'alimenter hydrauliquement les dispositifs de projection via le bus de distribution hydraulique, d'alimenter électriquement ces dispositifs de projection via le réseau d'alimentation et de commander ces mêmes dispositifs de projection via le bus de commande électronique. De la sorte, on simplifie là encore la conception et le montage de l'ensemble dans le véhicule, avec un circuit commun à tous les dispositifs de projection qui s'étend le long du véhicule et sur lequel les dispositifs de projection sont raccordés indépendamment les uns des autres, avec notamment des zones de raccordement à ce circuit commun qui sont situées à distance les unes des autres, et ce pour un circuit qui permet la distribution aussi bien hydraulique qu'électrique.

Comme ce qui a été décrit précédemment, on pourra envisager que le réseau d'alimentation des dispositifs de projection et le bus de commande électronique sont disposés de façon périphérique par rapport au conduit principal hydraulique.

Par ailleurs, on peut prévoir une variante de réalisation selon laquelle le bus de commande électronique et/ou le réseau d'alimentation sont agencés au centre du conduit principal hydraulique. On comprendra alors que le bus de distribution hydraulique présente une section annulaire pour recevoir en son centre, dans un agencement coaxial, le bus de commande électronique et/ou le réseau d'alimentation des dispositifs de projection. Dans ce cas, on comprend que l'unique bus de distribution électrique et hydraulique des dispositifs de projection est configuré pour que des piquages sont régulièrement prévus à travers le tube délimitant le conduit hydraulique principal pour permettre le raccordement électrique des dispositifs de projection.

Selon le mode de réalisation particulier dans lequel le bus de commande électronique et le bus de distribution hydraulique forment un même bus de distribution électrique et hydraulique des dispositifs de projection, le bus de distribution électrique et hydraulique peut comprendre au moins deux portions reliées l'une à l'autre par un connecteur électrique et hydraulique. Ce mode de réalisation particulier permet de relier électriquement et hydrauliquement deux portions du bus de distribution séparées par une paroi du véhicule, telle que décrite précédemment. Le connecteur électrique et hydraulique peut être monté dans une ouverture formée dans cette paroi. Une extrémité de chaque portion du bus de distribution destinée à être raccordée l'une à l'autre peut dès lors porter un port de connexion électrique et hydraulique pour son raccordement au connecteur électrique et hydraulique.

Selon d'autres caractéristiques de l'invention, il peut être prévu qu'au moins un premier dispositif de projection soit destiné à nettoyer une surface optique d'un capteur servant à une analyse automatique de la scène de route, c'est-à-dire une analyse par l'électronique du véhicule pour notamment le pilotage d'un dispositif d'aide à la conduite et/ou à la manœuvre de ce véhicule, et qu'au moins un deuxième dispositif de projection soit destiné à nettoyer une surface vitrée de l'habitacle ou une surface optique d'un capteur servant uniquement à l'analyse directe par le conducteur du véhicule. Dans ce cas, il est avantageux que le bus de distribution hydraulique soit agencé de sorte que l'au moins un deuxième dispositif de projection soit disposé sur le bus de distribution hydraulique, commun à chacun des dispositifs de projection, pour être plus éloigné d'une sortie de la pompe alimentant ce bus de distribution hydraulique que ne l'est l'au moins un premier dispositif de projection.

En effet, notamment lorsque le bus de distribution hydraulique commun à tous les dispositifs de projection est un circuit ouvert, on comprend que le produit nettoyant circulant au niveau de l'extrémité de ce circuit ouvert la plus éloignée de la pompe peut présenter une pression moins grande que celle du produit nettoyant circulant en sortie de pompe. Or, il importe que les systèmes de détection optique associés à des systèmes d'aide à la conduite soient immaculés afin d'éviter une mauvaise analyse de la scène de route détectée par l'électronique embarquée du véhicule alors que si le conducteur analyse par lui-même l'image détectée de la scène de route, il est plus à même d'analyser l'image partiellement entachée sans faire de faute de jugement. Dès lors, on peut avantageusement placer le deuxième dispositif de projection sur une portion du bus de distribution hydraulique où la pression est moins grande, le risque potentiel d'un nettoyage non optimal étant moins impactant. Par ailleurs, en priorisant ainsi l'alimentation hydraulique en produit nettoyant pour des premier et deuxième dispositifs de projection, c'est-à-dire en les plaçant de sorte qu'ils soient atteints plus ou moins vite par le produit nettoyant en sortie de pompe, il est possible d'éviter qu'une action non essentielle de nettoyage pénalise le déclenchement ou l'efficacité d'une action essentielle pour le traitement automatique des informations en provenance des systèmes de détection optique.

On comprend de ce qui précède qu'il est avantageux selon l'invention que dans un véhicule, plusieurs dispositifs de projection soient alimentés hydrauliquement, et le cas échéant électriquement, par un bus de distribution commun à l'ensemble de ces dispositifs de projection. Il est notamment possible d'avoir un unique bus de distribution hydraulique circulant le long du véhicule.

Selon une variante, il peut être prévu que le système de nettoyage comprenne deux bus de distribution hydraulique distincts et deux séries de dispositifs de projection distinctes, chaque série de dispositifs de projection étant reliée hydrauliquement à l'un des bus de distribution hydraulique conformément à ce qui a été décrit précédemment, c'est-à-dire avec l'ensemble des dispositifs de projection de cette série raccordés au bus de distribution correspondant indépendamment les uns des autres.

On pourra par exemple prévoir d'agencer un premier bus de distribution hydraulique et la première série de dispositifs de projection correspondante dans une première partie d'un véhicule et le deuxième bus de distribution hydraulique et la deuxième série de dispositifs de projection correspondante dans une deuxième partie d'un véhicule. A titre d'exemples non limitatifs, la première partie du véhicule peut être l'une des parties latérales du véhicule et la deuxième partie peut être l'autre des parties latérales du véhicule, ou bien la première partie du véhicule peut être une partie avant du véhicule et la deuxième partie peut être une partie arrière du véhicule.

Dans ce contexte, une autre répartition possible est que chacun des dispositifs de projection de la première série soit destiné à nettoyer une surface optique d'un capteur servant à une analyse automatique de la scène de route, et que chacun des dispositifs de projection de la deuxième série soit destiné à nettoyer une surface vitrée de l'habitacle ou une surface optique d'un capteur servant uniquement à l'analyse directe par le conducteur du véhicule. Il est alors intéressant que les dispositifs de projection de la première série soient alimentés hydrauliquement en produit nettoyant de façon distincte des dispositifs de projection de la deuxième série. En distinguant l'alimentation hydraulique en produit nettoyant pour chacune des première et deuxième séries de dispositifs de projection, il est possible de déclencher une commande de nettoyage pour la première ou la deuxième série sans pénaliser le déclenchement une commande de nettoyage pour l'autre série.

Lorsque le système de nettoyage comprend une première série de dispositifs de projection reliée hydrauliquement à un premier bus de distribution hydraulique et une deuxième série de dispositifs de projection reliée hydrauliquement à un deuxième bus de distribution hydraulique, il peut être prévu une même pompe pour alimenter hydrauliquement en produit nettoyant chacun des premier et deuxième bus de distribution hydrauliques. Il est également envisagé qu'une première pompe soit apte à alimenter le premier bus de distribution hydraulique en produit nettoyant et qu'une deuxième pompe soit apte à alimenter le deuxième bus de distribution hydraulique en produit nettoyant. Dans ce cas, chacune des pompes peut être reliée au même contenant ou chacun à un contenant distinct.

D'autres caractéristiques, détails et avantages de l'invention ressortiront plus clairement à la lecture de la description donnée ci-après à titre indicatif en relation avec des dessins dans lesquels :
- la figure 1 illustre une vue schématique d'un véhicule automobile équipé d'un système de nettoyage selon l'invention comprenant un bus de distribution hydraulique parcourant le véhicule pour distribuer un produit nettoyant à des dispositifs de projection du système de nettoyage montés dans différentes zones du véhicule, à proximité de systèmes de détection optique du véhicule,
- la figure 2 illustre une vue schématique d'une paroi structurelle du véhicule logeant un connecteur hydraulique configuré pour relier deux portions du bus de distribution hydraulique représenté sur la figure 1,
- la figure 3 illustre une vue schématique d'un mode de réalisation de l'invention dans lequel deux des dispositifs de projection de produit nettoyant sont reliés, d'une part, hydrauliquement au bus de distribution hydraulique et, d'autre part, électriquement à un bus de commande électronique, le bus de distribution hydraulique et le bus de commande électronique étant distincts l'un de l'autre,
- la figure 4 illustre une vue schématique d'un autre mode de réalisation de l'invention dans lequel le bus de distribution hydraulique et le bus de commande électronique forment un même bus de distribution électrique et hydraulique,
- la figure 5 est une représentation schématique de la section du bus de distribution électrique et hydraulique illustré à la figure 4.

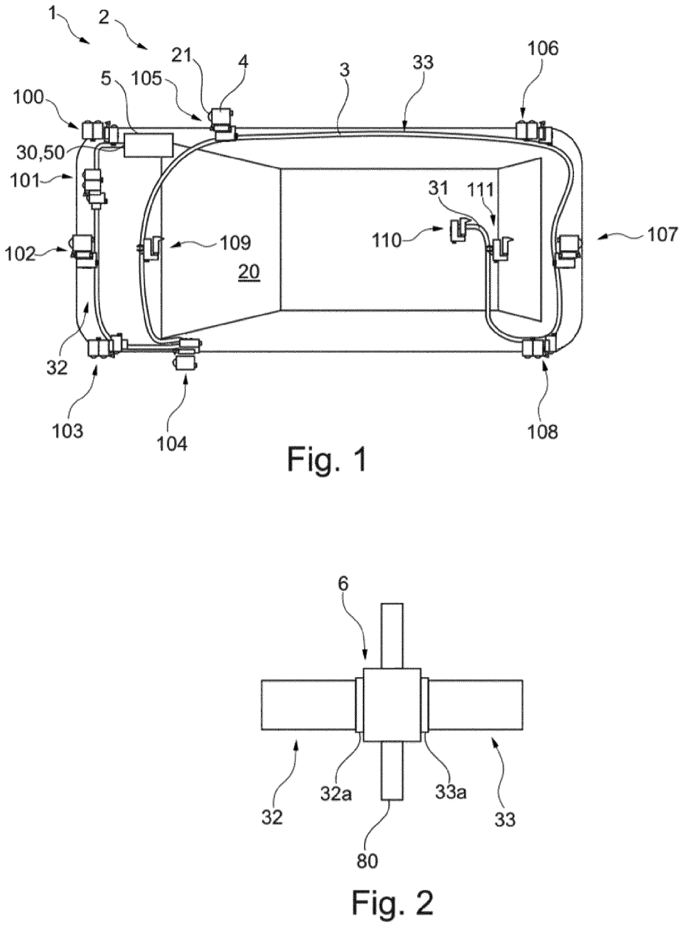

A la figure 1, on a représenté un véhicule 1 automobile équipé d'un système de nettoyage 2 selon l'invention, qui permet le nettoyage d'au moins une surface vitrée 20, 21 du véhicule 1. Une telle surface vitrée peut être par exemple un pare-brise 20 ou bien une lunette arrière du véhicule, ou elle peut être une surface optique 21 d'un système de détection optique 4 équipant le véhicule 1.

Le système de nettoyage 2 comprend un conduit de circulation hydraulique 3 apte à permettre la circulation d'un produit nettoyant et des dispositifs de projection 100 à 111 du produit nettoyant disposés dans le véhicule 1 pour être associés respectivement au nettoyage d'une surface vitrée 20, 21. Dans l'exemple illustré, un dispositif de projection est spécifiquement dédié au nettoyage d'une unique surface vitrée, mais on comprendra que plusieurs dispositifs de projection pourraient être dédiés au nettoyage d'une même surface vitrée, par exemple le pare-brise 20, sans sortir du contexte de l'invention dès lors qu'un conduit de circulation hydraulique principal forme un bus de distribution hydraulique 3 sur lequel est connectée une pluralité de ces dispositifs de projection.

Plus particulièrement, selon l'invention, chacun des dispositifs de projection 100 à 111 est relié par des organes de raccordement au bus de distribution hydraulique 3, et ces dispositifs de projection sont reliés à ce bus de distribution hydraulique de manière indépendante l'un de l'autre, et dans des zones distinctes et successives 90, 92 (visibles sur la figure 1) du bus de distribution hydraulique qui forme un bus commun à la pluralité des dispositifs de projection. Dans ce mode de réalisation non limitatif, on comprendra qu'un unique bus de distribution hydraulique assure l'alimentation en produit nettoyant de l'ensemble des dispositifs de projection 100 à 111 montés sur ce véhicule 1.

Le système de nettoyage 2 comprend par ailleurs une pompe 5 et un réservoir de stockage de produit nettoyant. La pompe 5 est configurée pour récupérer le produit nettoyant dans le réservoir de stockage et pour alimenter le conduit principal hydraulique de manière continu en produit nettoyant. Plus particulièrement, une sortie 50 de la pompe 5 est reliée à une première extrémité 30 du bus de distribution hydraulique 3. Il en résulte que le bus de distribution hydraulique 3 s'étend le long du véhicule depuis cette première extrémité 30 jusqu'à une deuxième extrémité 31. Dans l'exemple illustré, la deuxième extrémité 31 du bus de distribution hydraulique 3, opposée à la première extrémité 30, est fermée de sorte que le bus de distribution hydraulique 3 forme un circuit hydraulique ouvert. Bien entendu, le bus de distribution hydraulique pourrait être configuré de manière à former un circuit hydraulique fermé et la deuxième extrémité 31 du bus de distribution hydraulique pourrait dans ce contexte être reliée au réservoir de stockage.

En se référant à la figure 1, des premiers dispositif de projection 100 à 108 sont destinés à nettoyer une surface optique d'un capteur servant à une analyse automatique de la scène de route, c'est-à-dire une analyse par l'électronique du véhicule pour notamment le pilotage d'un dispositif d'aide à la conduite et/ou à la manœuvre de ce véhicule, et des deuxièmes dispositifs de projection 109 à 111 sont destinés à nettoyer une surface vitrée de l'habitacle ou une surface optique d'un capteur servant uniquement à l'analyse directe par le conducteur du véhicule. Le bus de distribution hydraulique 3 est configuré dans ce cas pour que ce soit l'un des deuxièmes dispositifs de projection, ici un dispositif associé au nettoyage de la lunette arrière, qui soit disposé en bout du bus de distribution hydraulique, au niveau de sa deuxième extrémité 31, c'est-à-dire dans la zone du bus de distribution la plus éloignée de la sortie 50 de la pompe 5.

Le bus de distribution hydraulique 3 présente ici une première portion 32 agencée dans la partie avant du véhicule, et une deuxième portion 33 agencée dans l'habitacle, chaque portion serpentant dans la partie du véhicule correspondante pour distribuer l'ensemble des dispositifs de projection présents dans cette partie du véhicule. On comprend qu'une continuité hydraulique est ici réalisée entre ces deux portions 32, 33 puisqu'une unique pompe 5 est prévue sur le bus de distribution.

A la figure 2, on a représenté un moyen d'assurer la continuité entre ces portions 32, 33 du bus de distribution hydraulique 3 lorsque celui-ci est amené à traverser une ou plusieurs paroi(s) 80 du véhicule 1, ceci avantageusement pour optimiser le parcours du bus de circulation hydraulique 3 dans le véhicule 1 et ainsi réduire la métrée de conduit nécessaire pour la réalisation du bus de distribution hydraulique 3 commun à chaque dispositif de projection. Dans ce cas, les portions 32, 33 sont reliées par paires l'une à l'autre via un connecteur hydraulique 6. Plus particulièrement, une première portion 32 et une deuxième portion 33 du bus de distribution hydraulique 3 portent chacune à leur extrémité en regard un port de connexion hydraulique 32a, 33a pour leur raccordement au connecteur hydraulique 6. Il peut être prévu que deux dispositifs de projection 100 à 111 soient reliés à une même portion 32, 33 du bus de distribution hydraulique 3 ou chacun à une portion 32, 33 du bus de distribution hydraulique 3 différente.

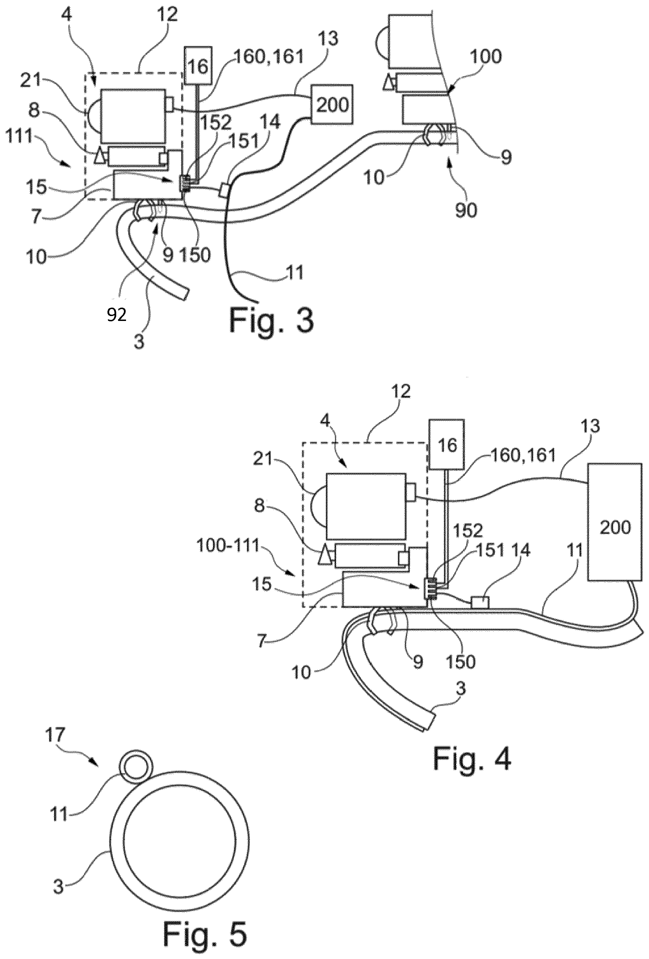

En se référant à la figure 3, on va maintenant décrire plus en détail les dispositifs de projection 100 à 111 du système de nettoyage 2 et leur coopération avec le bus de distribution hydraulique 3 commun à au moins deux de ces dispositifs de projection, tel qu'ils ont été représentés schématiquement sur cette figure 3. Dans ce qui va suivre, il est prévu que les dispositifs de projection présentent tous la même forme pour faciliter la standardisation du système de nettoyage, mais on pourra bien évidemment ajuster au besoin la forme et la dimension d'un dispositif de nettoyage sans sortir du contexte de l'invention, dès lors que conformément à ce qui a été décrit précédemment, chaque dispositif de projection est raccordé hydrauliquement sur le bus de distribution hydraulique de manière indépendante des autres dispositifs de projection.

Un dispositif de projection 100 à 111 comprend une électrovanne 7 et un gicleur 8. Lorsque l'électrovanne 7 est actionnée, elle autorise le passage du produit nettoyant circulant dans le bus de distribution hydraulique 3 vers le gicleur 8. Le produit nettoyant est alors projeté par le gicleur 8 sur une surface vitrée 20, 21 du système de détection optique 4 associé au dispositif de projection 100 à 111.

Le dispositif de projection comprend un organe de raccordement hydraulique 9 pour son raccordement au bus de distribution hydraulique 3. L'organe de raccordement hydraulique 9 présente une forme susceptible d'une part de percer le bus de distribution hydraulique 3 et susceptible d'autre part d'assurer le passage du produit nettoyant depuis ce bus de distribution vers le gicleur 8. A cet effet, l'organe de raccordement peut présenter la forme tubulaire et effilée d'une seringue. A l'assemblage de l'organe de raccordement hydraulique 9 sur le bus de distribution hydraulique 3, une résine peut être utilisée pour entourer une zone de contact entre l'organe de raccordement hydraulique 9 et le bus de distribution hydraulique 3, ceci pour assurer une étanchéité de cette zone de contact.

Selon l'invention, et tel que cela est visible sur la figure 3, deux dispositifs de projection 100 à 111 sont agencés successivement le long du bus de distribution hydraulique 3 pour y être raccordé par l'intermédiaire de ces organes de raccordement hydraulique 9 dans des zones distinctes successives 90, 92. Chaque dispositif de projection vient ainsi se piquer sur le bus de distribution hydraulique au fur et à mesure du déploiement de ce bus dans le véhicule.

Le dispositif de projection comprend un organe de maintien mécanique 10 permettant la fixation sur le bus de distribution hydraulique 3. Dans l'exemple illustré, l'organe de maintien mécanique 10 prend la forme d'une pince venant entourer au moins partiellement le conduit principal hydraulique participant à former le bus de distribution hydraulique 3 commun à la pluralité de dispositifs de projection 100 à 111. On pourra par exemple prévoir un organe de maintien à déformation élastique, définissant dans sa position d'origine une gorge de dimensions sensiblement inférieures à celle du conduit définissant le bus de distribution, l'opérateur ayant alors à forcer l'organe de raccordement à se déformer pour pouvoir venir en prise sur le bus de circulation hydraulique, et le rappel élastique de l'organe de raccordement assurant le maintien en position sur le bus.

A la figure 3, on a représenté deux dispositifs de projection comportant ces organes de raccordement hydraulique et ces organes de maintien mécanique coopérant avec le bus de distribution hydraulique 3. L'un des dispositifs de projection a été représenté partiellement, uniquement en rendant visible ces organes coopérant avec le bus de distribution hydraulique, afin d'illustrer la caractéristique selon l'invention selon laquelle un bus de distribution hydraulique dessert une pluralité de dispositifs de distribution, chacun de ces dispositifs venant se piquer sur ce bus de distribution hydraulique alors commun à la pluralité des dispositifs de distribution.

De façon additionnelle au raccordement hydraulique, tel qu'il vient d'être décrit, des dispositifs de projection sur un bus de distribution hydraulique commun, et tel que cela est visible pour l'un des dispositifs de projection représentés sur la figure 3 dans son intégralité, le dispositif de projection peut être relié, d'une part, hydrauliquement au bus de distribution hydraulique 3 et, d'autre part, à un bus de commande électronique 11, qui est relié électriquement à une unité électronique principale 200. On comprendra qu'il peut en être de même pour chacun des dispositifs de projection illustrés à la figure 1, de sorte que le bus de commande électronique est commun à l'ensemble des dispositifs de projection, de façon similaire au bus de distribution hydraulique.

On va décrire par la suite un dispositif de projection associé à un système de détection optique de type capteur optique, étant entendu que les caractéristiques relatives au raccordement hydraulique et électrique des dispositifs de projection sur un bus commun peuvent être reproduites pour un dispositif de projection destiné à nettoyer une surface vitrée tel que le pare-brise ou la lunette arrière.

Le dispositif de projection peut être logé dans un boîtier 12, tel qu'illustré schématiquement sur la figure 3. Le boîtier 12 comprend par ailleurs un système de détection optique 4 qui présente une surface vitrée que le dispositif de projection 100 à 111 associé doit nettoyer. Un tel système de détection optique 4 équipant le véhicule 1 peut être une caméra vidéo ou encore un scanner laser nécessaire pour permettre le fonctionnement d'un dispositif d'aide à la conduite et/ou à la manœuvre du véhicule 1.

Lorsqu'un dispositif de projection 100 à 111 est associé à un tel système de détection optique 4, ce dernier est configuré pour communiquer via un câble de connexion électronique 13, distinct du bus de commande électronique 11 des dispositifs de projection 100 à 111, avec une unité électronique principale 200 équipant ce véhicule 1. A titre d'exemple, lorsque le système de détection optique 4 est une caméra, ce câble de connexion électrique 13 permet de transmettre un signal vidéo à l'unité électronique principale 200.

Les dispositifs de projection 100 à 111 du système de nettoyage 2 sont reliés électriquement au bus de commande électronique 11 indépendamment l'un de l'autre. Le bus de commande électronique 11 est ici un bus de type LIN, étant entendu que d'autres protocoles de communication pourraient être utilisés.

L'électrovanne 7 comprend une unité électronique de pilotage (non représentée) pour sa commande et une borne de connexion électrique 15 configurée pour permettre le raccordement du dispositif de projection, et notamment de l'électrovanne, au bus de commande électronique 11. Plus particulièrement, un connecteur 14 est prévu sur le bus de commande électronique 11 pour permettre un raccordement de l'électrovanne sur le réseau de communication continuant jusqu'au prochain connecteur et à la prochaine électrovanne associée. Le connecteur 14 est relié, par exemple par un fil électrique à une première broche 150 de la borne de connexion électrique 15 de l'électrovanne 7. Une deuxième broche 151 et une troisième broche 152 de la borne de connexion électrique 15 sont prévues pour recevoir des brins issus d'un réseau d'alimentation 16 du véhicule 1 et permettant un raccordement électrique à un pôle positif 160, pour une tension préférentiellement égale à 12 V, et un pôle nul 161 pour la mise à la masse.

On va maintenant décrire le fonctionnement d'une électrovanne 7 dans sa commande par le bus de commande électronique 11.

L'unité électronique de pilotage d'une électrovanne 7 est reliée électriquement à la borne de connexion électrique 15. Cette unité électronique de pilotage est programmée pour analyser en continu les données transmises par le bus de commande électronique 11. Lorsque cette unité électronique de pilotage identifie une instruction émise par l'unité électronique principale 200, transmise via le bus de commande électronique 11 et qui lui est dédiée, par exemple une instruction de commande en ouverture de l'électrovanne 7, elle actionne l'électrovanne 7 qui lui est associée et l'autorise ainsi à diriger le produit nettoyant contenu dans le bus de distribution hydraulique 3 vers le gicleur 8 correspondant.

Le dispositif de projection récupère alors autant de produit nettoyant qu'il est nécessaire pour le nettoyage de la surface vitrée associée, c'est-à-dire la quantité de produit nettoyant passant par l'électrovanne le temps de son actionnement par l'unité électronique de pilotage.

A la figure 4, on a représenté schématiquement le bus de distribution hydraulique 3 et le bus de commande électronique 11 formant un unique bus de distribution 17 électrique et hydraulique, qui conformément à ce qui a été précédemment décrit, est configuré pour desservir une pluralité de dispositifs de projection 100 à 111. Tel que représenté, le bus de commande électronique 11 est formé conjointement avec le bus de distribution hydraulique 3. A la figure 5, on a représenté une section de ce bus de distribution 17 électrique et hydraulique, qui est ici formé de sorte que le bus de distribution hydraulique 3 prend la forme d'un tube extrudé à l'intérieur duquel s'écoule le produit nettoyant et qui porte sur sa périphérie au moins un conduit supplémentaire pour recevoir le bus de commande électronique 11, qui est de la sorte disposé de façon périphérique par rapport au bus de distribution hydraulique 3.

Lorsqu'un dispositif de projection 100 à 111 est relié hydrauliquement au bus de distribution hydraulique 3, l'organe de raccordement hydraulique 9 est avantageusement disposé sur le bus de distribution 17 électrique et hydraulique de sorte à ne pas endommager le bus de commande électronique 11.

On aura compris à la lecture de ce qui précède que le système de nettoyage selon l'invention est avantageux en ce qu'il comporte au moins deux dispositifs de nettoyage disposés à distance l'un de l'autre dans le véhicule et alimentés au moins hydrauliquement par un bus de distribution hydraulique commun à ces dispositifs de nettoyage. Le bus de distribution est agencé à travers le véhicule pour amener à proximité des dispositifs de nettoyage le produit nettoyant nécessaire au fonctionnement de ces dispositifs de nettoyage, et il est notable selon l'invention que ces dispositifs de nettoyage viennent puiser dans le produit nettoyant circulant lorsqu'il leur est donné une instruction de fonctionnement.

Bien entendu, les caractéristiques, les variantes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique.

## Revendications

1. Système de nettoyage (2) d'au moins une surface vitrée (20, 21) de véhicule (1) comprenant :
- un bus de distribution hydraulique (3) apte à permettre la circulation d'un produit nettoyant depuis un réservoir de stockage,
- au moins deux dispositifs de projection (100 à 111) du produit nettoyant sur l'au moins une surface vitrée (20, 21),
les au moins deux dispositifs de projection (100 à 111) étant reliés par des organes de raccordement hydraulique (9) au bus de distribution hydraulique (3), indépendamment l'un de l'autre et dans des zones successives (90, 92) dudit bus de distribution hydraulique (3), et **caractérisé en ce qu'**il comprend un bus de commande électronique (11), les au moins deux dispositifs de projection (100 à 111) étant reliés électriquement au bus de commande électronique (11) indépendamment l'un de l'autre, le bus de commande électronique (11) et le bus de distribution hydraulique (3) formant un même bus de distribution (17) électrique et hydraulique des dispositifs de projection (100 à 111).

2. Système de nettoyage (2) selon la revendication précédente, **caractérisé en ce qu'**il comprend une pompe (5) apte à alimenter le bus de distribution hydraulique (3) en produit nettoyant.

3. Système de nettoyage (2) selon l'une quelconque des revendications précédentes, **caractérisé en ce que** le bus de distribution hydraulique (3) comprend au moins deux portions (30, 31) agencées de part et d'autre d'une paroi et reliées l'une à l'autre par un connecteur hydraulique (6).

4. Système de nettoyage (2) selon l'une quelconque des revendications précédentes, **caractérisé en ce qu'**au moins un des dispositifs de projection (100 à 111) comprend des organes de maintien mécanique (10) sur le bus de distribution hydraulique (3).

5. Système de nettoyage (2) selon l'une quelconque des revendications précédentes, **caractérisé en ce que** chacun des dispositifs de projection (100 à 111) comprend une électrovanne (7) et un gicleur (8).

6. Système de nettoyage (2) selon les revendications 4 et 5, **caractérisé en ce que** l'organe de raccordement hydraulique (9) et l'organe de maintien mécanique (10) d'un dispositif de projection (100 à 111) sont portés par l'électrovanne (7) de ce dispositif de projection.

7. Système de nettoyage (2) selon l'une quelconque des revendications précédentes, **caractérisé en ce qu'**au moins un des dispositifs de projection (100 à 111) est associé à un système de détection optique (4), le dispositif de projection et le système de détection optique associé étant logés dans un boîtier commun (12).

8. Système de nettoyage (2) selon l'une quelconque des revendications précédentes, en combinaison avec la revendication 2, **caractérisé en ce que** au moins un premier dispositif de projection (100-108) étant destiné à nettoyer une surface optique d'un capteur servant à une analyse automatique de la scène de route et au moins un deuxième dispositif de projection (109-111) étant destiné à nettoyer une surface vitrée de l'habitacle ou une surface optique d'un capteur servant uniquement à l'analyse directe par le conducteur du véhicule, le bus de distribution hydraulique (3) étant agencé de sorte que l'au moins un deuxième dispositif de projection (109-111) soit disposé sur le bus de distribution hydraulique (3), commun à chacun des dispositifs de projection, pour être plus éloigné d'une sortie de la pompe (5) alimentant ce bus de distribution hydraulique que ne l'est l'au moins un premier dispositif de projection (100-108).

## Patentansprüche

1. Reinigungssystem (2) mindestens einer verglasten Fläche (20, 21) eines Fahrzeugs (1), das enthält:
- einen hydraulischen Verteilerbus (3), der den Durchfluss eines Reinigungsmittels ausgehend von einem Vorratsbehälter erlauben kann,
- mindestens zwei Vorrichtungen (100 bis 111) zum Spritzen des Reinigungsmittels auf die mindestens eine verglaste Fläche (20, 21),
wobei die mindestens zwei Spritzvorrichtungen (100 bis 111) unabhängig voneinander und in aufeinanderfolgenden Zonen (90, 92) des hydraulischen Verteilerbusses (3) durch hydraulische Anschlussorgane (9) mit dem hydraulischen Verteilerbus (3) verbunden sind,
**dadurch gekennzeichnet, dass** es einen elektronischen Steuerbus (11) enthält, wobei die mindestens zwei Spritzvorrichtungen (100 bis 111) unabhängig voneinander elektrisch mit dem elektronischen Steuerbus (11) verbunden sind, wobei der elektronische Steuerbus (11) und der hydraulische Verteilerbus (3) einen gleichen elektrischen und hydraulischen Verteilerbus (17) der Spritzvorrichtungen (100 bis 111) bilden.

2. Reinigungssystem (2) nach dem vorhergehenden Anspruch, **dadurch gekennzeichnet, dass** es eine Pumpe (5) enthält, die den hydraulischen Verteilerbus (3) mit Reinigungsmittel versorgen kann.

3. Reinigungssystem (2) nach einem der vorhergehenden Ansprüche, **dadurch gekennzeichnet, dass** der hydraulische Verteilerbus (3) mindestens zwei Abschnitte (30, 31) enthält, die zu beiden Seiten einer Wand angeordnet und durch einen hydraulischen Verbinder (6) miteinander verbunden sind.

4. Reinigungssystem (2) nach einem der vorhergehenden Ansprüche, **dadurch gekennzeichnet, dass** mindestens eine der Spritzvorrichtungen (100 bis 111) Organe für den mechanischen Halt (10) auf dem hydraulischen Verteilerbus (3) enthält.

5. Reinigungssystem (2) nach einem der vorhergehenden Ansprüche, **dadurch gekennzeichnet, dass** jede der Spritzvorrichtungen (100 bis 111) ein Elektroventil (7) und eine Spritzdüse (8) enthält.

6. Reinigungssystem (2) nach den Ansprüchen 4 und 5, **dadurch gekennzeichnet, dass** das hydraulische Anschlussorgan (9) und das mechanische Halteorgan (10) einer Spritzvorrichtung (100 bis 111) vom Elektroventil (7) dieser Spritzvorrichtung getragen werden.

7. Reinigungssystem (2) nach einem der vorhergehenden Ansprüche, **dadurch gekennzeichnet, dass** mindestens eine der Spritzvorrichtungen (100 bis 111) einem optischen Erfassungssystem (4) zugeordnet ist, wobei die Spritzvorrichtung und das zugeordnete optische Erfassungssystem in einem gemeinsamen Gehäuse (12) untergebracht sind.

8. Reinigungssystem (2) nach einem der vorhergehenden Ansprüche in Kombination mit Anspruch 2, **dadurch gekennzeichnet, dass** mindestens eine erste Spritzvorrichtung (100-108) dazu bestimmt ist, eine optische Fläche eines Sensors zu reinigen, der zur automatischen Analyse des Straßenbilds dient, und mindestens eine zweite Spritzvorrichtung (109-111) dazu bestimmt ist, eine verglaste Fläche des Innenraums oder eine optische Fläche eines Sensors zu reinigen, der nur zur direkten Analyse durch den Fahrer des Fahrzeugs dient, wobei der hydraulische Verteilerbus (3) so angeordnet ist, dass die mindestens eine zweite Spritzvorrichtung (109-111) auf dem jeder der Spritzvorrichtungen gemeinsamen hydraulischen Verteilerbus (3) angeordnet ist, um weiter von einem diesen hydraulischen Verteilerbus versorgenden Ausgang der Pumpe (5) entfernt zu sein als die mindestens eine erste Spritzvorrichtung (100-108).

## Claims

1. System (2) for cleaning at least one glazed surface (20, 21) of a vehicle (1) comprising:
- a hydraulic distribution bus (3) able to allow a cleaning product to flow from a storage tank,
- at least two devices (100 to 111) for projecting the cleaning product onto the at least one glazed surface (20, 21),
the at least two projection devices (100 to 111) being linked by hydraulic connection elements (9) to the hydraulic distribution bus (3), independently of one another and in successive areas (90, 92) of said hydraulic distribution bus (3), **characterized in that** it comprises an electronic control bus (11), the at least two projection devices (100 to 111) being linked electrically to the electronic control bus (11) independently of one another, the electronic control bus (11) and the hydraulic distribution bus (3) forming one and the same electric and hydraulic distribution bus (17) for the projection devices (100 to 111).

2. Cleaning system (2) according to the preceding claim, **characterized in that** it comprises a pump (5) able to supply the hydraulic distribution bus (3) with cleaning product.

3. Cleaning system (2) according to either one of the preceding claims, **characterized in that** the hydraulic distribution bus (3) comprises at least two portions (30, 31) that are arranged on either side of a wall and linked to one another by a hydraulic connector (6).

4. Cleaning system (2) according to any one of the preceding claims, **characterized in that** at least one of the projection devices (100 to 111) comprises elements (10) for mechanical holding on the hydraulic distribution bus (3).

5. Cleaning system (2) according to any one of the preceding claims, **characterized in that** each of the projection devices (100 to 111) comprises a solenoid valve (7) and a sprinkler (8).

6. Cleaning system (2) according to Claims 4 and 5, **characterized in that** the hydraulic connection element (9) and the mechanical holding element (10) of a projection device (100 to 111) are borne by the solenoid valve (7) of this projection device.

7. Cleaning system (2) according to any one of the preceding claims, **characterized in that** at least one of the projection devices (100 to 111) is associated with an optical detection system (4), the projection device and the associated optical detection system being housed in a common housing (12).

8. Cleaning system (2) according to any one of the preceding claims, in combination with Claim 2, **characterized in that** at least one first projection device (100-108) is intended to clean an optical surface of a sensor used for automatic analysis of the road scene and at least one second projection device (109-111) is intended to clean a glazed surface of the passenger compartment or an optical surface of a sensor used only for direct analysis by the driver of the vehicle, the hydraulic distribution bus (3) being arranged such that the at least one second projection device (109-111) is positioned on the hydraulic distribution bus (3), common to each of the projection devices, so as to be further away from an output of the pump (5) supplying this hydraulic distribution bus than the at least one first projection device (100-108) is.
